# EUROPÄISCHE PATENTSCHRIFT

(11) **EP 0 930 446 B1**
(45) Veröffentlichungstag und Bekanntmachung des Hinweises auf die Patenterteilung: **19.05.2004**
(21) Anmeldenummer: 98123077.4
(22) Anmeldetag: 10.12.1998
(51) Int. Cl.: F16D 65/56

(54) **Automatische Nachstellvorrichtung für eine Innenbacken-Trommelbremse**
Automatic adjuster for an internal shoe drum brake
Dispositif de réglage automatique pour un frein à tambour à mâchoires intérieures

(30) Priorität: 19.01.1998 DE 19801789
(43) Veröffentlichungstag der Anmeldung: 21.07.1999
(73) Patentinhaber: Volkswagen Aktiengesellschaft, 38436 Wolfsburg (DE)
(72) Erfinder: Sintram, Ulf, 38547 Calberlah (DE)

(56) Entgegenhaltungen:
- EP-A- 0 262 014
- FR-A- 766 811
- US-A- 3 762 510

## Beschreibung

Die Erfindung bezieht sich auf eine Innenbacken-Trommelbremse nach dem Oberbegriff des Patentanspruches 1.

Aus der DE-A-26 53 677 ist eine Innenbacken-Trommelbremse bekannt, die eine zweigeteilte Druckstange aufweist. Die Druckstange weist eine Spindel auf, die in einem Hohlzylinder axial einschiebbar ist und die gegenüber dem Hohlzylinder verdrehbar ist, wobei hierdurch die Länge der Druckstange entsprechend eingestellt wird. Hierdurch wird das übermäßige Lüftspiel verringert. Die Einstellung der Länge der Druckstange erfolgt mit Hilfe eines Klinkenhebels, der als eine Art Winkelhebel ausgebildet ist, und einer Klinke. Die Klinke greift in eine Einstellmutter ein, über die die Spindel der Druckstange entsprechend bewegt werden kann. Liegt ein übermäßiges Lüftspiel vor, so wird die Klinke über den Winkelhebel und damit die Einstellmutter entsprechend bewegt, so daß die Länge der Druckstange vergrößert wird. Da die Druckstange funktionell mit den Bremsbacken verbunden, nämlich zwischen diesen angeordnet ist, wird die Einstellung der Länge der Druckstange auf die Bremsbacken übertragen, so daß das übermäßige Lüftspiel verringert wird. Die bekannte Innenbacken-Trommelbremse bzw. die Nachstellvorrichtung dieser InnenbackenTrommelbremse ist derart ausgebildet, daß bei Vorliegen eines übermäßigen Lüftspiels durch eine Bremsbetätigung die Nachstellvorrichtung das übermäßige Lüftspiel sofort verringert.

Eine Innenbacken-Trommetbremse der eingangs genannten Art ist weiterhin aus der EP 0 262 014 A2 bekannt.

Unter den heutigen sich verändernden Schwerpunkten bei der Konstruktion von Kraftfahrzeugen, insbesondere unter dem Gesichtspunkt der Gewichtsersparnis, werden andere bzw. neue Materialien eingesetzt, die u.a. verschiedene thermische Ausdehnungskoeffizienten bzw. unterschiedlich starke Ausdehnungen bei Erwärmung aufweisen.

So besteht die Möglichkeit, die Bremstrommeln aus Aluminium herzustellen. Da sich bei länger andauernden Bremsvorgängen, z.B. bei Talfahrten, aufgrund der entsprechenden Reibung eine starke Erwärmung der Bremstrommel einstellt, neigt insbesondere eine Bremstrommel aus Aluminium dazu, sich thermisch auszudehnen. Ein Einsatz einer Nachstellvorrichtung könnte somit zu einer Nachstellung aufgrund der thermischen Ausdehnung führen, die nach Abkühlen wiederum zu einem zu geringen Lüftspiel oder sogar einem Festsitzen der Bremsbacken führen könnte. Dies hätte zur Folge, daß die Bremsbacken nunmehr übermäßig verschleißen würden und Reibungsverluste auftreten, die für das Kraftfahrzeug zunächst unökonomisch sind, da die Bremsbacken verschleißen und der Kraftstoffbedarf zunimmt. Eine derartige Bremse würde zwar den sicherheitstechnischen Anforderungen genügen, kann aber aufgrund der möglicherweise auftretenden erhöhten Reibungsverluste zwischen Bremsbacken und Bremstrommelwandung bzgl. der ökonomischen und ökologischen Gesichtspunkte eines Kraftfahrzeugs verbessert werden.

Um eine entsprechende Vergrößerung des Lüftspiels zu verhindern, sind bei bekannten Nachstellvorrichtungen teilweise Thermoschalter vorgesehen, die bei einer langsamen Erwärmung eine unberechtigte Nachstellung verhindern. Einer raschen Erwärmung aufgrund von z.B. Folgestoppbremsungen, bei denen das Fahrzeug mehrmals hintereinander beschleunigt und wieder abgebremst wird, können derartige Thermoschalter jedoch nicht folgen. Bei derartigen Folgestoppbremsungen kann das Fahrzeug bei den Bremsvorgängen sukzessive erhöht werden, wobei es sich in den dazwischenliegenden Beschleunigungsvorgängen eventuell nur unzureichend abkühlen kann, so daß die Temperatur insgesamt ansteigt. Dabei können bei einer erhöhten Temperatur bei den jeweiligen Bremsvorgängen die unberechtigten Nachstellungen ausgelöst werden, die bei abgekühlten Bremsen wiederum zum Festsitzen der Bremsen führen.

Der Erfindung liegt daher die Aufgabe zugrunde, eine Innenbacken-Trommelbremse der eingangs genannten Art derart auszugestalten und weiterzubilden, daß insbesondere möglicherweise unnötig auftretende Reibungsverluste verringert sind und der Einsatz einer derartigen Innenbacken-Trommelbremse für das Kraftfahrzeug ökonomische und ökologische Vorteile mit sich bringt.

Die zuvor genannte Aufgabe wird durch eine Innenbacken-Trommelbremse mit den Merkmalen von Patentanspruch 1 gelöst.

Die Grundidee der Erfindung besteht darin, daß ein übermäßiges Lüftspiel nicht bei jeder Bremsbetätigung bzw. unmittelbar nach seinem ersten Auftreten verringert wird, sondern erst nach einer bestimmten Mehrzahl von Bremsbetätigungen. Dies hat den Vorteil, daß bei einer Bremstrommel aus Aluminium, die bei mehreren Bremsbetätigungen oder einem länger andauernden Bremsvorgang eine hohe thermische Ausdehnung aufweist, auch bei mehreren Bremsbetätigungen nur wenige Nachstellungen, vorteilhafterweise sogar nur eine Nachstellung erfolgt und das Lüftspiel somit nicht im überhöhten Maße verringert wird. Folglich ist nach Abkühlung der Bremstrommel eine bessere Einstellung des Lüftspiels gewährleistet. Hierdurch werden unnötige Reibungsverluste vermieden, so daß der Einsatz der erfindungsgemäßen Innenbacken-Trommelbremse ökonomische und ökologische Vorteile aufweist.

Es gibt nun eine Vielzahl von Möglichkeiten, die erfindungsgemäße Innenbacken-Trommelbremse in vorteilhafter Weise auszugestalten und weiterzubilden. Hierfür darf auf die weiteren Patentansprüche verwiesen werden.

Nachfolgend wird die Erfindung an einem Ausführungsbeispiel und der beiliegenden Zeichnung näher erläutert. In dieser zeigen:
- FIG. 1: die erfindungsgemäße Innenbacken-Trommelbremse,
- FIG. 2: den linken Teil der erfindungsgemäßen Innenbacken-Trommelbremse aus FIG. 1 in einer vergrößerten Darstellung,
- FIG. 3: das Lagergehäuse der Nachstellvorrichtung der erfindungsgemäßen Innenbacken-Trommelbremse in einer explosionsartigen teilweisen Darstellung,
- FIG. 4: eine Darstellung ähnlich der nach FIG. 3, wobei in dieser Explosionsdarstellung mehrere Elemente dargestellt sind,
- FIG. 5: eine Unteransicht eines Ausschnitts der Druckstange aus FIG.1, und
- FIG. 6: eine Schnittansicht eines Ausschnitts der Druckstange aus FIG. 1.

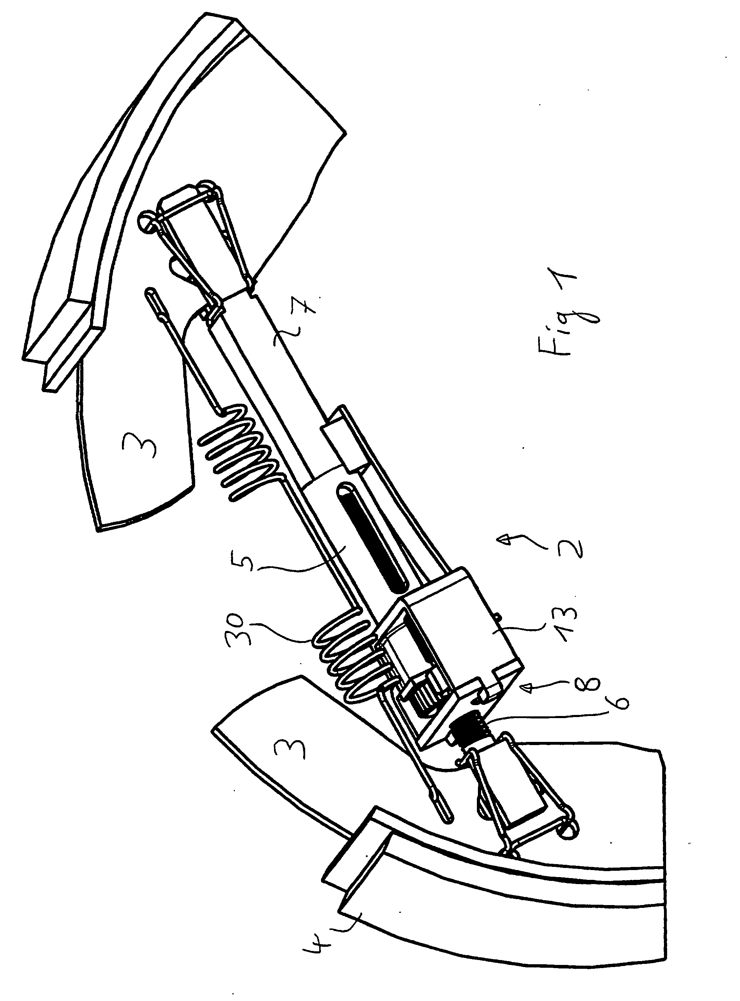

Die FIG. 1 zeigt in einer schematischen Darstellung eine Innenbacken-Trommelbremse 1 für Kraftfahrzeuge. Die Innenbacken-Trommelbremse 1 weist eine Nachstellvorrichtung 2 zum Ausgleich eines übermäßigen Lüftspiels zwischen den Bremsbacken 3 und der Bremstrommelwandung 4 auf. Die Nachstellvorrichtung 2 weist eine zwischen den Bremsbacken 3 angeordnete und funktionell mit dem Bremsbacken 3 verbundene Druckstange 5 auf. Die Länge der Druckstange 5 ist zum Ausgleich des übermäßigen Lüftspiels in Abhängigkeit von Bremsbetätigungen verstellbar. Durch eine Rückholfeder 30 werden die Bremsbacken nach erfolgter Betätigung,d.h. Spreizung, wieder in ihre Ausgangslage zurückgeholt.

Wie eingangs beschrieben, ist bei der erfindungsgemäßen Innenbacken-Trommelbremse 1 nun besonders vorteilhaft. daß die Nachstellvorrichtung 2 so ausgebildet ist, daß erst nach einer bestimmten Mehrzahl erfolgter Bremsbetätigungen eine entsprechende Längeneinstellung der Druckstange 5 zum Ausgleich eines übermäßigen Lüftspiels erfolgt. Hierdurch wird unnötiger zusätzlicher Reibverschleiß zwischen den Bremsbacken 3 und der Bremstrommelwandung 4 vermieden, was einerseits eine Schonung der Bremsbacken 3 gewährleistet, andererseits den Kraftstoffbedarf des Kraftfahrzeugs, da unnötige Reibung vermieden wird, entsprechend minimiert. Im Ergebnis bietet die erfindungsgemäße Innenbacken-Trommelbremse 1, insbesondere beim Einsatz in einem hier nicht dargestellten Kraftfahrzeug, entsprechende ökonomische und ökologische Vorteile.

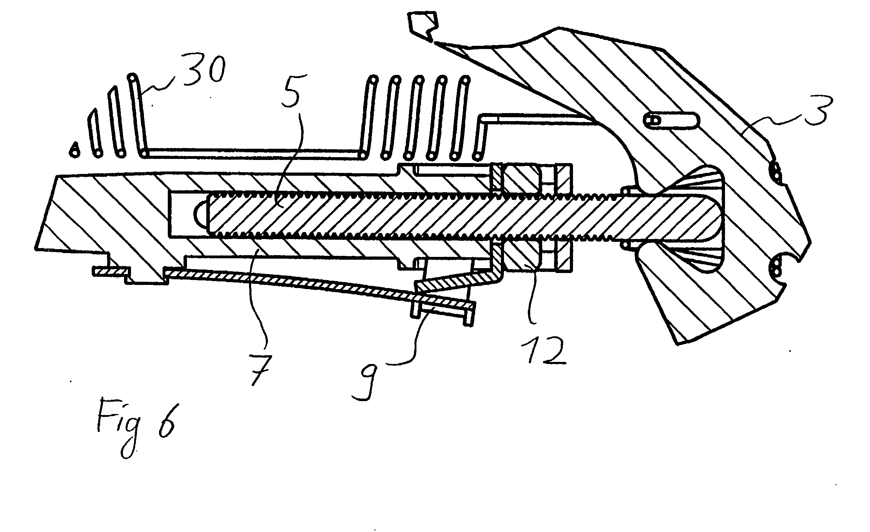

Insbesondere die FIG. 1,2, 5 und 6 zeigen, daß die Druckstange 5 im wesentlichen zweigeteilt ausgebildet ist und ein mit einem Außengewinde versehenes erstes Teilelement 6 und ein mit einer Längsbohrung versehenes zweites Teilelement 7 aufweist. Das erste Teilelement 6 ist hier als Spindel und das zweite Teilelement 7 als Hohlzylinder ausgebildet. Das als Spindel ausgebildete erste Teilelement 6 ist in das als Hohlzylinder ausgebildete zweite Teilelement 7 axial einschiebbar.

Wie die Längeneinstellung der Druckstange 5 hier verwirklicht worden ist bzw. auf welche Art und Weise die Nachstellvorrichtung 2 ein übermäßiges Lüftspiel zwischen Bremsbacken 3 und Bremstrommelwandung 4 ausgleichen kann, soll im folgenden erörtert werden. Anhand der FIG. 1 bis 4 soll das zugrunde liegende Prinzip deutlich werden. Aus diesem Grund sind in den FIG. 1 bis 4 auch nicht alle Einzelheiten, sondern nur die für das Prinzip erforderlichen Einzelheiten dargestellt. Bspw. ist der die bei einem Bremsvorgang auseinanderdrückenden Bremsbacken 3 grundsätzlich im oberen Bereich der FIG. 1 angeordnete Bremsdruckzylinder hier nicht dargestellt.

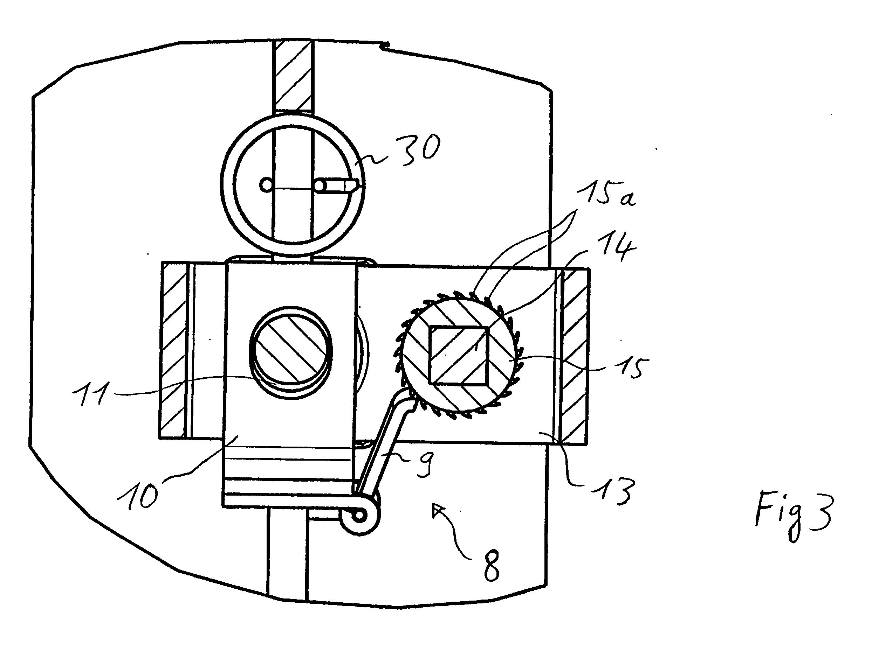

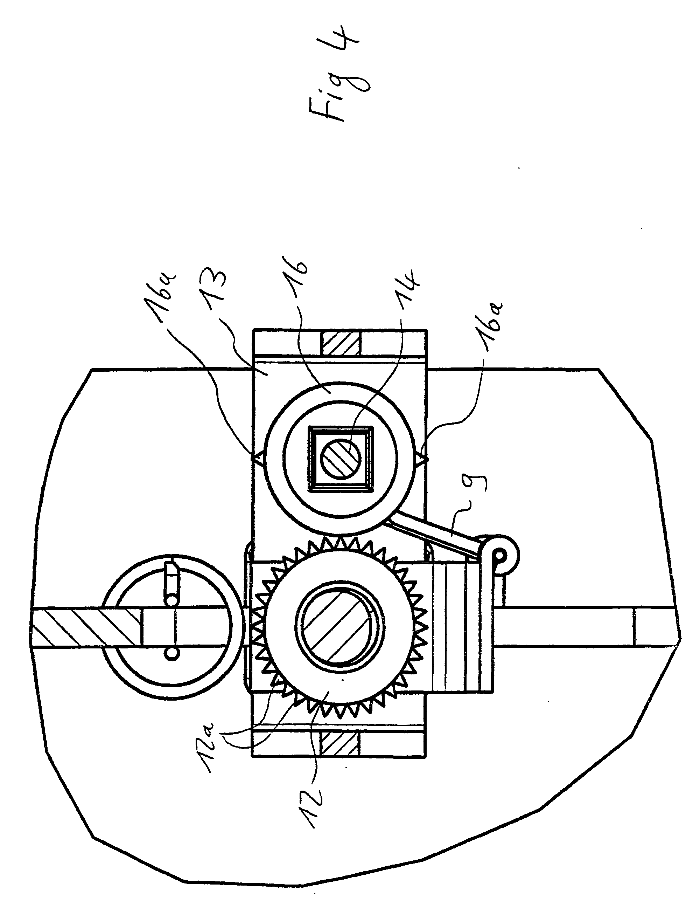

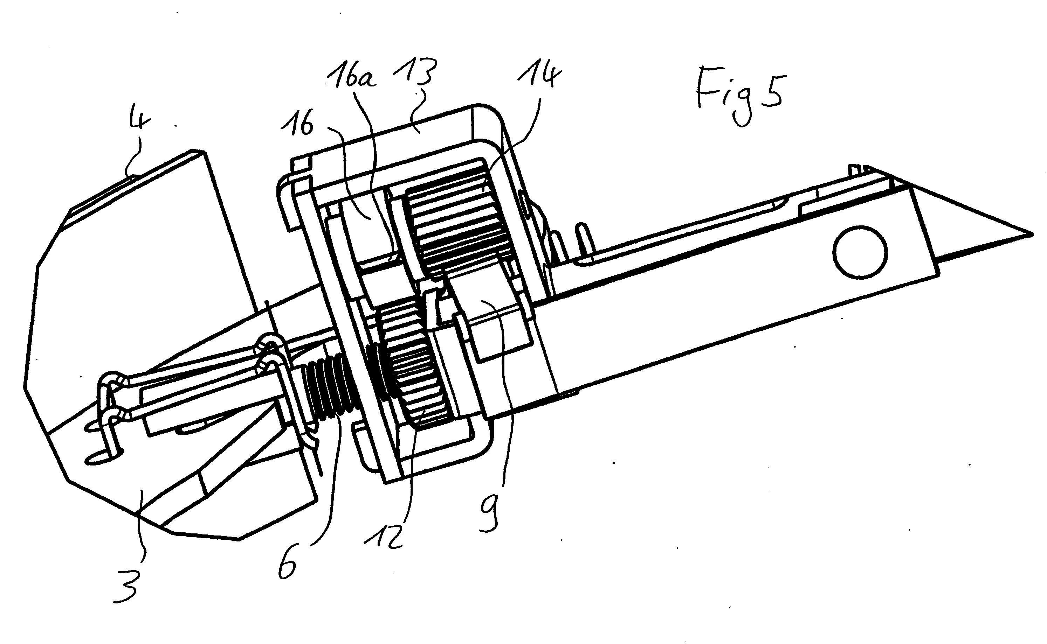

Insbesondere die teilweise Explosionsdarstellung der Nachstellvorrichtung 2 in FIG. 3 zeigt deutlich, daß die Nachstellvorrichtung 2 einen Klinkenmechanismus 8 aufweist, wobei eine Klinke 9 vorgesehen ist, die in Abhängigkeit einer Bremsbetätigung bewegbar ist. Der Klinkenmechanismus 8 ist bei erfolgenden bzw. nach erfolgten Bremsbetätigungen entsprechend aktivierbar, was im folgenden noch näher erläutert werden wird. Entscheidend ist aber, daß mit der Hilfe des Klinkenmechanismus 8 die Längeneinstellung der Druckstange 5 realisierbar ist.

FIG. 1, FIG. 3 und FIG. 4 zeigen, daß der Klinkenmechanismus 8 zusätzlich zur Klinke 9 einen Winkelhebel 10 aufweist, der mit dem als Spindel ausgebildeten ersten Teilelement 6 der Druckstange 5 in Eingriff steht. Hierzu weist der Winkelhebel 10 eine in FIG. 3 bezeichnete Öffnung 11 auf, durch die sich das erste Teilelement 6 der Druckstange 5 erstreckt.

Auf dem nicht näher bezeichneten Außengewinde des ersten Teilelements 6 der Druckstange 5 ist eine Einstellmutter 12 angeordnet. Die Einstellmutter 12 wirkt funktionell mit dem Klinkenmechanismus 8 zusammen. Hierzu steht die Einstellmutter 12 aber nicht direkt mit der Klinke 9 des Klinkenmechanismus 8 in Eingriff, d.h. die Einstellmutter 12 und der Klinkenmechanismus 8 wirken nicht direkt zusammen, sondern indirekt. Zwischen der Einstellmutter 12 und dem Klinkenmechanismus 8 ist nämlich eine Art Getriebe angeordnet. Durch die Anordnung dieses Getriebes zwischen der Einstellmutter 12 und dem Klinkenmechanismus 8 wird gewährleistet, daß erst nach einer bestimmten Mehrzahl erfolgter Bremsbetätigungen eine entsprechende Längeneinstellung der Druckstange 5 zum Ausgleich eines übermäßigen Lüftspiels erfolgt.

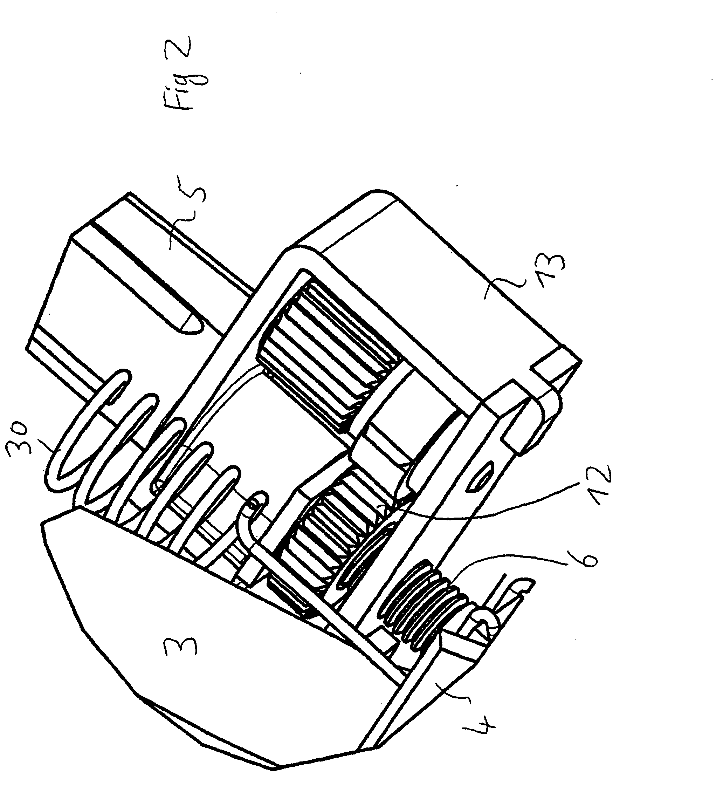

Wie die FIG. 2 erkennen läßt, sind die Einstellmutter 12, ein wesentlicher Teil des Klinkenmechanismus 8 und das entsprechende Getriebe in einem hierfür vorgesehenen Lagergehäuse 13 angeordnet. Die teilweise Explosionsdarstellung in FIG. 3 zeigt, daß die Klinke 9 des Klinkenmechanismus 8 mit einem auf einer separaten Welle 14 angeordneten ersten Zahnrad 15 zusammenwirkt. Auf der separaten Welle 14 ist zusätzlich ein Kupplungszahnrad 16 angeordnet, das mit der Einstellmutter 12 direkt funktional zusammenwirkt (vgl. Darstellung in FIG. 4).

Durch das erste Zahnrad 15, das Kupplungszahnrad 16, die Einstellmutter 12 und die auf dem ersten Zahnrad 15, auf dem Kupplungszahnrad 16 und auf der am Umfang der Einstellmutter 12 vorgesehenen bestimmten Anzahl von Zähnen 15a, 16a und 12a ist eine Art Getriebe gebildet, so daß erst nach einer bestimmten Mehrzahl erfolgter Bremsbetätigungen, vorzugsweise nach zehn Bremsbetätigungen eine entsprechende Längeneinstellung der Druckstange 5 zum Ausgleich eines übermäßigen Lüftspiels erfolgt. Bei einer Bremsbetätigung erfolgt nämlich ein Kippen des ersten Teilelements 6 der Druckstange 5, so daß der Winkelhebel 10 eine entsprechende Bewegung auf die Klinke 9 überträgt und diese entsprechend betätigt wird, um auf das erste Zahnrad 15 zu wirken.

Der Bewegungsablauf der Nachstellvorrichtung 2 ist im wesentlichen folgender:

Bei einem Bremsvorgang drückt der nicht dargestellte Bremsdruckzylinder die Bremsbacken 3 auseinander, damit diese an der Bremstrommelwandung 4 anliegen können. Da das erste Teilelement 6 axial in das zweite Teilelement 7 eingeschoben ist, kann - wie aus FIG. 2 erkennbar ist - sich das erste Teilelement 6 leicht nach außen verschieben, so daß das erste Teilelement 6 leicht abkippen kann und so den Winkelhebel 10 bewegt. Ist der Bremsvorgang beendet, so bewegt sich das erste Teilelement 6 in seine Ausgangslage zurück, bis die Einstellmutter 12 wieder am Winkelhebel 10 bzw. am Lagergehäuse 13 anliegt, wobei der Winkelhebel 10 wiederum entsprechend bewegt wird. Aufgrund der Bewegung des Winkelhebels 10 führt die im Klinkenmechanismus 8 vorgesehene Klinke 9 eine entsprechende Bewegung aus und dreht das erste Zahnrad 15. Dadurch, daß das erste Zahnrad 15 und das Kupplungsrad 16 auf der gleichen separaten Welle 14 angeordnet sind, führt auch das Kupplungszahnrad 16 eine entsprechende Drehung aus. Wie FIG. 4 zeigt, weist hier das Kupplungszahnrad 16 nur zwei sich gegenüberliegende Zähne 16a auf, so daß die Klinke 9 aufgrund einer Mehrzahl von Bremsbetätigungen entsprechende einzelne sich addierende Drehungen des ersten Zahnrads 15 verursacht, solange, bis ein Zahn 16a des Kupplungszahnrads 16 mit der Einstellmutter 12 in Eingriff ist, um die Einstellmutter 12 entsprechend zu drehen. Erst durch die Drehung der Einstellmutter 12 wird dann die Länge der Druckstange 5 entsprechend verändert, da durch die Drehung der Einstellmutter 12 eine Änderung der Lage der Einstellmutter 12 auf dem als Spindel ausgebildeten ersten Teilelement 6 der Druckstange 5 erfolgt. Im Ergebnis wird hierdurch die gesamte wirksame Länge der Druckstange 5 entsprechend eingestellt, so daß ein übermäßiges Lüftspiel ausgeglichen werden kann.

Je nachdem, wie das hier zwischen der Einstellmutter 12 und dem Klinkenmechanismus 8 dargestellte Getriebe, nämlich das erste Zahnrad 15 und das Kupplungszahnrad 16 bzw. die Anzahl der Zähne 15a und 16a ausgebildet bzw. angeordnet sind, erfolgt erst nach einer bestimmtem Mehrzahl erfolgter Bremsbetätigungen eine entsprechende Längeneinstellung der Druckstange 5 zum Ausgleich eines übermäßigen Lüftspiels. Vorzugsweise erfolgt der Ausgleich eines übermäßigen Lüftspiels erst nach zehn Bremsbetätigungen.

Im Ergebnis kann die hier dargestellte Innenbacken-Trommelbremse 1 sehr vorteilhaft bei Bremstrommeln eingesetzt werden, die aus Aluminium hergestellt sind, was die eingangs geschilderten Vorteile mit sich bringt.

## Patentansprüche

1. Innenbacken-Trommelbremse (1), insbesondere für Kraftfahrzeuge, mit einer Nachstellvorrichtung (2) zum Ausgleich eines übermäßigen Lüftspiels zwischen Bremsbacken (3) und Bremstrommelwandung (4), wobei die Nachstellvorrichtung (2) eine zwischen den Bremsbacken (3) angeordnete und funktionell mit diesen verbundene Druckstange (5), eine Einstellmutter (12) und eine Klinke (9) aufweist und die Länge der Druckstange (5) zum Ausgleich des übermäßigen Lüftspiels in Abhängigkeit von Bremsbetätigungen verstellbar ist, **dadurch gekennzeichnet, daß** zwischen der Klinke (9) und der Einstellmutter (12) ein Getriebe eingekoppelt ist, dessen eingangsseitiges Zahnrad (15) mit der Klinke (9) in Eingriff steht und bei erfolgter Bremsbetätigung und einem übermäßigen Lüftspiel weiterschaltbar ist, und dessen ausgangsseitiges Zahnrad (16) mit der Einstellmutter (12) in Eingriff steht und diese nach mehreren Weiterschaltungen des eingangsseitigen Zahnrads (15) weiterschaltet, so daß erst nach einer bestimmten Mehrzahl erfolgter Bremsbetätigungen eine entsprechende Längeneinstellung der Druckstange (5) zum Ausgleich eines übermäßigen Lüftspiels erfolgt.

2. Innenbacken-Trommelbremse nach dem vorhergehenden Anspruch, **dadurch gekennzeichnet, daß** die Druckstange (5) im wesentlichen zweigeteilt ausgebildet ist und ein mit einem Außengewinde versehenes erstes Teilelement (6) und ein mit einer Längsbohrung versehenes zweites Teilelement (7) aufweist.

3. Innenbacken-Trommelbremse nach Anspruch 2, **dadurch gekennzeichnet, daß** das erste Teilelement (6) in das zweite Teilelement (7) axial einschiebbar ist, und das erste Teilelement (6) als Spindel und das zweite Teilelement (7) als Hohlzylinder ausgebildet ist.

4. Innenbacken-Trommelbremse nach einem der vorhergehenden Ansprüche, **dadurch gekennzeichnet, daß** die Nachstellvorrichtung (2) einen Klinkenmechanismus (8) aufweist, der die in Abhängigkeit einer Bremsbetätigung bewegbarere Klinke (9) umfaßt, der bei erfolgenden bzw. nach erfolgten Bremsbetätigungen entsprechend aktivierbar ist, und mit dessen Hilfe die Längeneinstellung der Druckstange (5) realisierbar ist.

5. Innenbacken-Trommelbremse nach Anspruch 4, **dadurch gekennzeichnet, daß** der Klinkenmechanismus (8) zusätzlich einen Winkelhebel (10) aufweist, der mit dem ersten Teilelement (6) in Eingriff steht.

6. Innenbacken-Trommelbremse nach einem der vorhergehenden Ansprüche 2 bis 5, **dadurch gekennzeichnet, daß** die Einstellmutter (12) auf dem das Außengewinde aufweisenden ersten Teilelement (6) der Druckstange (5) angeordnet ist und die Einstellmutter (12) funktionell mit dem Klinkenmechanismus (8) zusammenwirkt.

7. Innenbacken-Trommelbremse nach einem der vorhergehenden Ansprüche, **dadurch gekennzeichnet, daß** die Einstellmutter (12), ein wesentlicher Teil des Klinkenmechanismus (8) und das entsprechende Getriebe in einem hierfür vorgesehen Lagergehäuse (13) angeordnet sind.

8. Innenbacken-Trommelbremse nach einem der vorhergehenden Ansprüche, **dadurch gekennzeichnet, daß** die Klinke (9) mit dem auf einer separaten Welle (14) angeordneten ersten, eingangsseitigen Zahnrad (15) zusammenwirkt.

9. Innenbacken-Trommelbremse nach Anspruch 8, **dadurch gekennzeichnet, daß** auf der separaten Welle (14) zusätzlich ein ausgangsseitiges Kupplungszahnrad (16) angeordnet ist, das mit der Einstellmutter (12) direkt funktionell zusammenwirkt.

10. Innenbacken-Trommelbremse nach einem der vorhergehenden Ansprüche 8 oder 9, **dadurch gekennzeichnet, daß** durch das erste Zahnrad (15), das Kupplungszahnrad (16), die Einstellmutter (12) und die auf dem ersten Zahnrad (15), auf dem Kupplungszahnrad (16) und auf der am Umfang der Einstellmutter (12) vorgesehen bestimmten Anzahlen von Zähnen (15a, 16a, 12a) ein Getriebe gebildet ist, so daß erst nach einer bestimmten Mehrzahl erfolgter Bremsbetätigungen, vorzugsweise nach zehn Bremsbetätigungen, eine entsprechende Längeneinstellung der Druckstange (5) zum Ausgleich eines übermäßigen Lüftspiels erfolgt.

11. Innenbacken-Trommelbremse nach einem der vorhergehenden Ansprüche 5 bis 10, **dadurch gekennzeichnet, daß** bei einer Bremsbetätigung ein Kippen des ersten Teilelements (6) erfolgt, so daß der Winkelhebel (10) eine entsprechende Bewegung auf die Klinke (9) überträgt, so daß diese entsprechend betätigt wird.

## Claims

1. Internal-shoe drum brake (1), in particular for motor vehicles, with an adjusting device (2) for compensating an excessive lifting play between brake shoes (3) and brake-drum wall (4), the adjusting device (2) having a pressure rod (5) arranged between the brake shoes (3) and functionally connected to these, a setting nut (12) and a pawl (9), and the length of the pressure rod (5) being adjustable for compensating the excessive lifting play as a function of brake actuations, **characterized in that**, between the pawl (9) and the setting nut (12), a gear unit is incorporated, the input-side gearwheel (15) of which is in engagement with the pawl (9) and can be switched further when brake actuation has taken place and in the event of excessive lifting play, and the output-side gearwheel (16) of which is in engagement with the setting nut (12) and switches the latter further after a plurality of further switches of the input-side gearwheel (15), so that an appropriate length setting of the pressure rod (5) for compensating an excessive lifting play takes place only after a defined plurality of brake actuations have taken place.

2. Internal-shoe drum brake according to the preceding claim, **characterized in that** the pressure rod (5) is designed essentially in two parts and has a first part-element (6) provided with an external thread and a second part-element (7) provided with a longitudinal bore.

3. Internal-shoe drum brake according to Claim 2, **characterized in that** the first part-element (6) can be pushed axially into the second part-element (7), and the first part-element (6) is designed as a spindle and the second part-element (7) as a hollow cylinder.

4. Internal-shoe drum brake according to one of the preceding claims, **characterized in that** the adjusting device (2) has a pawl mechanism (8) which comprises the pawl (9), moveable as a function of a brake actuation and appropriately activatable when brake actuations are taking place or have taken place, and with the aid of which the length setting of pressure rod (5) can be carried out.

5. Internal-shoe drum brake according to Claim 4, **characterized in that** the pawl mechanism (8) additionally has an angle lever (10) which is in engagement with the first part-element (6).

6. Internal-shoe drum brake according to one of the preceding Claims 2 to 5, **characterized in that** the setting nut (12) is arranged on the first part-element (6), having the external thread, of the pressure rod (5), and the setting nut (12) co-operates functionally with the pawl mechanism (8).

7. Internal-shoe drum brake according to one of the preceding Claims, **characterized in that** the setting nut (12), a substantial part of the pawl mechanism (8) and the corresponding gear unit are arranged in a bearing housing (13) provided for this purpose.

8. Internal-shoe drum brake according to one of the preceding Claims, **characterized in that** the pawl (9) co-operates with the first, input-side gearwheel (15) arranged on a separate shaft (14).

9. Internal-shoe drum brake according to Claim 8, **characterized in that** the separate shaft (14) has additionally arranged on it an output-side coupling gearwheel (16) which directly co-operates functionally with a setting nut (12).

10. Internal-shoe drum brake according to either one of the preceding Claims 8 and 9, **characterized in that** the first gearwheel (15), the coupling gearwheel (16), the setting nut (12) and the defined number of teeth (15a, 16a, 12a) provided on the first gearwheel (15), on the coupling gearwheel (16) and on the circumference of the setting nut (12) form a gear unit, so that an appropriate length setting of the pressure rod (5) for compensating an excessive lifting play takes place only after a defined plurality of brake actuations which have taken place, preferably after ten brake actuations.

11. Internal-shoe drum brake according to one of the preceding Claims 5 to 10, **characterized in that**, in the event of a brake actuation, a taping of the first part-element (6) takes place, so that the angle lever (10) transmits a corresponding movement to the pawl (9), so that the latter is actuated correspondingly.

## Revendications

1. Frein à tambour à mâchoires intérieures (1), notamment pour véhicules automobiles, comprenant un dispositif de rattrapage (2) pour la compensation d'un jeu excessif entre les mâchoires de frein (3) et la paroi du tambour de frein (4), le dispositif de rattrapage (2) présentant une tige de compression (5) disposée entre les mâchoires de frein (3) et connectée fonctionnellement à celles-ci, un écrou d'ajustement (12) et un cliquet (9) et la longueur de la tige de compression (5) pouvant être réglée pour compenser le jeu excessif en fonction d'actionnements des freins, **caractérisé en ce qu'**un engrenage est accouplé entre le cliquet (9) et l'écrou d'ajustement (12), dont la roue dentée du côté de l'entrée (15) est en prise avec le cliquet (9) et peut être avancée davantage après un actionnement des freins et dans le cas d'un jeu excessif, et dont la roue dentée du côté de la sortie (16) est en prise avec l'écrou d'ajustement (12) et fait avancer celui-ci après plusieurs commutations supplémentaires de la roue dentée du côté de l'entrée (15), de sorte qu'il se produise un ajustement correspondant de la longueur de la tige de compression (5) pour compenser un jeu excessif seulement après une pluralité déterminée d'actionnements des freins.

2. Frein à tambour à mâchoires intérieures selon la revendication précédente, **caractérisé en ce que** la tige de compression (5) est réalisée essentiellement en deux parties et présente un premier élément partiel (6) pourvu d'un filetage externe et un deuxième élément partiel (7) pourvu d'un alésage longitudinal.

3. Frein à tambour à mâchoires intérieures selon la revendication 2, **caractérisé en ce que** le premier élément partiel (6) peut être enfoncé axialement dans le deuxième élément partiel (7) et le premier élément partiel (6) est réalisé en tant que broche et le deuxième élément partiel (7) en tant que cylindre creux.

4. Frein à tambour à mâchoires intérieures selon l'une quelconque des revendications précédentes, **caractérisé en ce que** le dispositif de rattrapage (2) présente un mécanisme à cliquet (8) avec un cliquet (9) déplaçable en fonction d'un actionnement des freins, et le mécanisme à cliquet (8) peut être activé en conséquence au cours de l'actionnement ou après l'actionnement des freins et avec l'aide duquel l'ajustement en longueur de la tige de compression (5) peut être réalisé.

5. Frein à tambour à mâchoires intérieures selon la revendication 4, **caractérisé en ce que** le mécanisme à cliquet (8) présente en outre un levier coudé (10) qui est en prise avec le premier élément partiel (6).

6. Frein à tambour à mâchoires intérieures selon l'une quelconque des revendications 2 à 5 précédentes, **caractérisé en ce que** l'on prévoit sur le premier élément partiel (6) de la tige de compression (5) présentant le filetage externe un écrou d'ajustement (12) et l'écrou d'ajustement (12) coopère fonctionnellement avec le mécanisme à cliquet (8).

7. Frein à tambour à mâchoires intérieures selon l'une quelconque des revendications précédentes, **caractérisé en ce que** l'écrou d'ajustement (12), une partie essentielle du mécanisme à cliquet (8) et l'engrenage correspondant sont disposés dans un carter de support (13) prévu à cet effet.

8. Frein à tambour à mâchoires intérieures selon l'une quelconque des revendications précédentes, **caractérisé en ce que** le cliquet (9) coopère avec une première roue dentée (15) du côté de l'entrée disposée sur un arbre séparé (14).

9. Frein à tambour à mâchoires intérieures selon la revendication 8, **caractérisé en ce qu'**une roue dentée d'accouplement (16) du côté de la sortie est en outre disposée sur l'arbre séparé (14), laquelle coopère directement fonctionnellement avec l'écrou d'ajustement (12).

10. Frein à tambour à mâchoires intérieures selon l'une quelconque des revendications 8 ou 9 précédentes, **caractérisé en ce qu'**un engrenage est formé par la première roue dentée (15), la roue dentée d'accouplement (16), l'écrou d'ajustement (12) et le nombre de dents (15a, 16a, 12a) déterminé prévu sur la première roue dentée (15), sur la roue dentée d'accouplement (16) et sur la périphérie de l'écrou d'ajustement (12), de sorte qu'un ajustement correspondant de la longueur de la tige de compression (5) a lieu pour compenser un jeu excessif seulement après une pluralité déterminée d'actionnements des freins, de préférence après dix actionnements des freins.

11. Frein à tambour à mâchoires intérieures selon l'une quelconque des revendications 5 à 10 précédentes, **caractérisé en ce que** lors d'un actionnement des freins, un basculement du premier élément partiel (6) a lieu, de sorte que le levier coudé (10) transmette un mouvement correspondant au cliquet (9) de sorte que celui-ci soit actionné de manière correspondante.
